# EUROPEAN PATENT SPECIFICATION

(11) **EP 2 081 361 B1**
(45) Date of publication and mention of the grant of the patent: **26.03.2014**
(21) Application number: 08290050.7
(22) Date of filing: 21.01.2008
(51) Int. Cl.: H04L 29/06, H04L 29/08

(54) **Converged information systems**
Konvergierte Informationssysteme
Systèmes d'informations combinés

(43) Date of publication of application: 22.07.2009
(73) Proprietor: Alcatel Lucent, 75007 Paris (FR)
(72) Inventor: Kisel, Andrey, Maidenhead SL6 8DH (GB); Robinson, David Cecil, Aldbourne, Wiltshire SN8 2NP (GB)
(74) Representative: Sarup, David Alexander

(56) References cited:
- WO-A-02/05063
- WO-A-02/43414
- GB-A- 2 406 939
- US-A1- 2003 217 166
- US-A1- 2006 067 209
- US-B1- 6 782 403
- "Universal Mobile Telecommunications System (UMTS); Open Service Access (OSA); Parlay X web services; Part 3: Call notification (3GPP TS 29.199-03 version 6.4.0 Release 6); ETSI TS 129 199-3" ETSI STANDARDS, LIS, SOPHIA ANTIPOLIS CEDEX, FRANCE, vol. 3-CT5;3-CN5, no. V6.4.0, 1 December 2006 (2006-12-01), XP014040123 ISSN: 0000-0001

## Description

This invention relates to converged information systems. In particular, it relates to a system in which user equipment (UE) is used to communicate and receive types of data using many different protocols.

Users of IPTV (Internet Protocol TV) may wish to use many different communication and information technologies. For example, SMS, MMS, IMS (IP multimedia sub-system), IMS-IM, VOIP call, RSS, email, calendar function, instant messaging services such as MSN or Google Talk, internet notification and many other types of services. These generally all involve different protocols. Operators are increasingly interested in offering IPTV users functionality for acting upon notifications from some or all of the notification sources above. That is, when a user is informed of a request or transmission using a particular protocol, they receive a notification and functionality is provided in the UE to enabling the user to choose how to deal with this. These applications are generally referred as 'converged services' and these are added value services to traditional IPTV (such as broadcast TV, content on demand or video on demand VOD).

Similarly, users ideally prefer to have multimedia services and communication experience adaptable to their lifestyles. For example, users may wish to receive notifications about high priority email, SMS messages or calls from persons on a 'buddy list' on a TV screen and take appropriate response actions.

Existing methods of providing such converged services to a UE may use a gateway from the notification source to the UE and require a separate notification client to be provided at the UE containing notification processing logic particular to each type of communication (SMS, email, VOIP, calendar functionality, etc). For example, for delivering IMS VOIP (session initiation protocol) calls to IP subsystems, a gateway is used to delivery IMS VOIP notifications to an IPTV UE. This gateway can deliver call notifications to the IPTV UE using SIP and a built in client on the UE offers response actions. Typically, the possible options may include: redirect to voicemail, request more information about caller, deny, answer or other.

An example of such a system is disclosed in US2003/217166 or US2006/067209.

Another example is email notifications. Notifications of incoming emails are delivered either directly or via the gateway to the UE user, by an email protocol such as POP3, IMAP, SMTP and so on and a different in built client on the UE offers response actions. Typically, these might be reply, read the body, ignore, other. Depending upon the response, the client would then retrieve the text of the email using POP3, IMAP and so on.

The main problem with this existing approach is that it requires a specialised UE client containing specific protocols and notification processing logic for each notification source. This client must be provided on the UE itself. This creates the following limitations.

A new UE client is required to support new notification sources, eg email, SMS, which is not cost efficient in a medium to higher scale deployment,
new notification processing logic is required on the UE to support new notification sources
additional processing logic on the UE requires extra processing power and hardware requires, increasing costs,
arbitration between multiple notification clients and other applications also increases cost, and
customisation of each client is required when a graphic user interface (GUI) is customised, again increasing costs.

Furthermore, it is difficult to add new services to an existing UE.

Such a notification method is standardised in ES 20239 10-3 'Open Service Access' (OSA) 'parlay X-web services Part 3 : Call Notification'. In this, a client application has to register for a specific notification source and implements notification processing logic.

The present invention arose in an attempt to provide an improved method of implementing notification and response actions from multiple notification sources on a UE device and from our attempt to provide a system in which enables new easy addition of new notification sources and types.

According to the present invention there is provided a notification system for providing notifications, over a network, to a user equipment (UE) from a plurality of sources using at least two different protocols, comprising a notification agent arranged to receive notifications from said plurality of notification sources and which are intended for the user equipment, the notification agent including means for receiving the notifications using a plurality of native protocols according to the protocol of the individual sources and for converting the notification to a single protocol, and providing notifications to the UE using the single protocol and means for allowing replies from a UE to be transmitted, over the single protocol, to the notification agent and from there, if appropriate, to the original source using the native protocol of said original source, including notification processing logic for providing further information to the UE with each notification, beyond the basic notification data; including data representative of one or more actions a user might wish to select in response to the notification.

In a further aspect, the invention further provides a method of transmitting notifications from a plurality of agents, having different native protocols, to user equipment (UE) over a network, comprising providing a notification agent, including notification processing logic and adapted to receive notifications from the plurality of agents using their native protocol and to convert the native protocols to a single notification protocol and forward these notifications to the UE using a single protocol, and the notification agent including notification processing logic for providing further information to the UE with each notification, beyond the basic notification data and means to allow replies from a UE to be transmitted, over the single protocol to the notification agent and from there, if appropriate, to the original source using the native protocol of said original source; the method providing further information to the UE with each notification, beyond the basic notification data; including data representative of one or more actions a user might wish to select in response to the notification.

The notification client at the UE can be arranged to indicate to a user that the notification has been received and, if appropriate, to present a range of possible actions to the user such that the user can select an action. If appropriate, the user can then pass back the selected action to the notification action agent for subsequent handling.

The invention further provides a notification agent, comprising a notification agent, comprising means for receiving notifications from a plurality of sources using different native protocols, and for providing notification to a UE using a single protocol, means for converting the native protocols to the single protocol and the notification agent including notification processing logic for providing further information to the UE with each notification, beyond the basic notification data, means for allowing replies from a UE to be transmitted, over the single protocol to the notification agent and from there, if appropriate, to the original source using the native protocol of said original source: including notification processing logic for providing further information to the UE with each notification, beyond the basic notification data; including data representative of one or more actions a user might wish to select in response to the notification.

The invention further provides a notification system or agent including one or more of the novel features or combination of features disclosed and/or claimed herein.

Embodiments of the invention will now be described, by way of example only, with reference to the accompanying schematic drawings, in which:
Figure 1 shows a notification system;
Figure 2 shows data flow;
Figure 3 shows a data package;
Figure 4 shows a screen display on user equipment (UE);
Figure 5 shows another screen display; and
Figure 6 shows a first screen display.

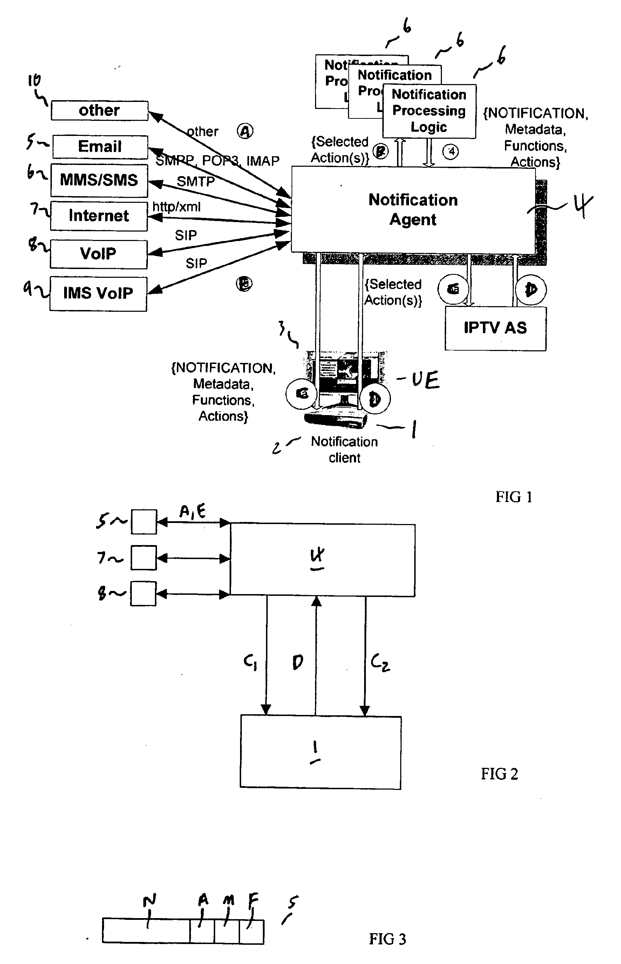

Referring now to Figure 1, a generalised system is shown for enabling user equipment 1 to be able to receive notifications from various sources. The UE 1 in this case is a IPTV apparatus including a set top box 2 connected to a display 3 although the STB may of course be integral with the display. Alternatively, the UE may be any other equipment such as a mobile phone, PDA or handheld terminal or any other device. Means (not forming part of the invention) may be provided which can indicate whether a particular user any time is using his mobile device or set top box or other device, so that communication can be addressed to the relevant device.

This is connected by any suitable communication channel, eg a closed IP network, opened Internet, wireless channel such as one using GPRS, UMTS, or other wireless or fixed line channels or by a combination of these or any other means to remote 'middle ware' provided at any suitable location on a network and which includes a notification agent 4. The notification agent 4 can receive and transmit data to and from a series of gateways to various communication services including email 5, MMS/SMS services 6, internet 7, VOIP services 8, IMS VOIP services 9 and many other types of services 10. These may well communicate with many different protocols. For example, email may be communicated using SMTP, POP3, IMAP or SMPP, communication with the internet may use HTTP/XML, VOIP may use SIP (session initiation protocol) as may IMS VOIP and other data sources may use similar or other protocols.

The notification agent 4 is arranged to collect/receive notifications from the multiple notification sources 5 to 10. Note that for scalability multiple agents can be used. Different modes can be used, eg a passive listening mode for incoming SIP or an active pull mode for internet updates, or other functions, for example. The incoming notifications are received from the various notification services via individual standard interfaces and this is shown as Step A in Figure 1. The notification agent 4 includes functionality which processes the notification and converts it to a single notification format/protocol. In addition, the notification agent 4 packages metadata, response actions, presentation properties and allowed functions and these are referred to as '{notification, action, metadata, functions}' ie {NAMF} package. A typical package is shown schematically in Figure 3 where a package 5 includes the notification N, the range of possible actions A, metadata M and functions F and this package is transmitted to the UE 1. It will be described further below.

Figure 1 shows a number of notification processing logic units 6 which are external, pluggable logic devices. The notification agent may pass incoming notifications from multiple information sources 5 to 10 to the notification project logic devices 6 for initial processing and this is shown as step B in Figure 1.

Once the notification agent has packaged the {NAMF} they are then sent to the UE in step C. They may be passed together, ie as a package as shown in Figure 3, or separately and the actual transport implementation/protocol may be any suitable one. The UE presents the notification and various options/actions to the user via the display 3. Optionally, notification can be delivered via an IPTV AS. The various options available are displayed to the user and he can select one of these. After the user selects a desired action, the UE passes back the selected action to the notification agent, step D. The notification agent then either processes the selected action or passes it to the relevant pluggable notification processing logic 6. Optionally, new notification and action selection is required to be delivered back to the UE. The notification agent then generates new NAMF and passes this to the STB. The further iterations are needed then steps B, C and D can be repeated literally.

If a response is need to the original notification source 5 to 10, then the notification agent 4 delivers the response via the standard (native) notification service interface on which the notification was originally received, step E.

Figure 2 illustrates schematically the flow of data. Notifications from the various agents (in this case three agents; email 5, internet 7 and VOIP 8 are shown by way of example only) are received by a notification agent 4. This converts the notifications to a single notification format/signal protocol. It generates the {NAMF} package and transmits this to the UE 1. The UE 1 then displays the notification and any options available and the user selects an option. This is then transmitted back in step D to the notification agent 4. If further communication data transfer is required with the original agent then this occurs, otherwise the notification agent, possibly via notification processing logic 6 (not shown in Figure 2 for clarity) then transmits a further {NAMF} on step C2 back to the UE. All communications between the notification agent 4 and the UE are done via a single protocol, via single communicational means, and thus notification processing logic is now no longer required at the UE itself. This is all done at the notification agent 4. Hence multiple notification sources can be supported. In fact, virtually unlimited extensions can be added onto the middle-ware based notification agent 4 to include emerging new notification sources (eg email, SMS, other sources) without any upgrades or modifications required to the UE.

In more general terms, the common notification agent NA4 in the middle-ware collects and receives notifications from multiple notification sources. The agent receives and processes notification and packages the notifications in a unified way with metadata, response actions, presentation properties, allowed function or other parameters or functionality and this package is then transmitted to the UE via a single notification channel. The UE therefore presents notifications to the user using package presentation properties and with a unified UE look and feel, independent of the nature of the source 5 to 10.

The actual {NAMF} package transmitted is shown by way of example in Figure 3. In addition to the basic notification, as described various other information is packaged. This can include actions A. For example, if the notification relates to an email, then the 'notification' may comprise the subject only of the email. The 'actions' may comprise various actions that the user can take such a READ, SAVE, GET BODY, IGNORE and so on. The 'functions' may include information instructing the UE (for example a set top box) how to display the subject and the various actions, including position on screen, duration of display, size/colour, etc of selectable virtual buttons, and so on. Various types of 'metadata' can also be included and other functions or data can of course be included. The function F may include not only how to the display the various options, eg in the form of buttons on a display but also where to physically place these buttons on a display and also, if the user is viewing an IPTV program or other content at the time how to deal with the content which is already displayed. For example, information can be included as to whether the notification and the various functions should be overlaid on top of the existing display, or in place of the existing display or whether the existing display, if it is video content, should be allowed to continue whilst the notification is displayed or whether it should be blanked or frozen. Many other types of information may be transmitted. The information may also include instructions to automatically save video content so that when a notification is no longer displayed on the screen, the video content automatically restarts from where it stopped (ie a pause function).

The other elements, which might be transmitted, can relate to, for example, priority information. This might mean for example that if a message originates from a person on the user's buddy list or a person who for other reasons should be accorded greater priority, then that message is displayed more prominently, or perhaps displayed in preference to another message which might already be being displayed, or might alter any other presentation properties. It might be that the message comes from the child of a user and that the user therefore needs the message to be viewed very urgently. Many other types of logic will be apparent.

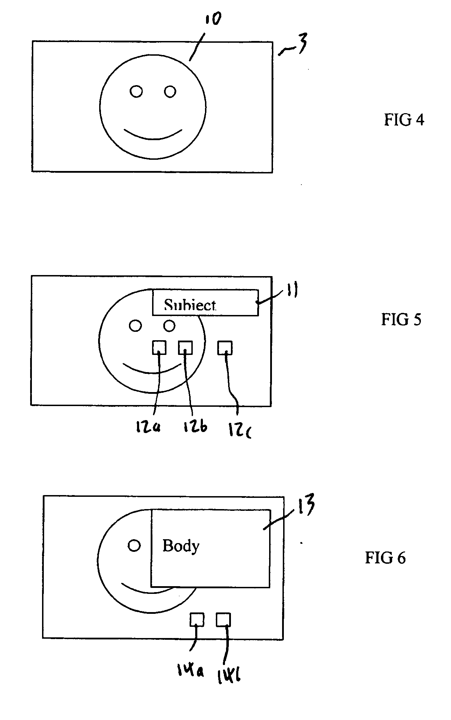

Figures 4 to 6 show example displays. In Figure 4, a video 10 is being displayed on a display 3. When a notification arises, subject to the processing logic and instructions sent with the notification, it is displayed in a manner which is overlaid on the video image 10. In this case, the information is in the form of an email and the subject of the email is displayed in a first box 11. A plurality of action buttons 12a, 12b and 12c are also displayed, overlaid on the video image. 12a may read GET BODY, 12b may read DELETE, 12c may read SAVE and so on. There may be more or less than three buttons of course. The buttons 12a are selectable, perhaps by the user selecting button '1' (for example) on a remote control, using a keyboard or other input means, or by direct touch using a touch screen, by using a remote control pointer or by any other means.

If the user selects choice 12a GET SUBJECT then this message is relayed back to the notification agent and then back to the email source 5 (Figure 1). The subject is then obtained and transmitted back to the UE. Figure 6 shows the subsequent display where the body (or full message) is displayed in box 13 together with some further options. These might read, for example, DELETE in box 14a and REPLY in box 14b. Many other options will, of course, be possible and there may be more or less than two possible reply buttons.

The embodiments of Figures 4 to 6 are of course schematic and are representative of where the message is an email. Other types of notification and display will be appropriate for other types of data.

There may for example be a scenario of content sharing. In this case, the notification agent 4 detects that new user-generated content has been uploaded by an uploading agent 10. The agent generates notification to the 'buddies' of the content originator to the effect that 'You Have New Content From Fred'. This might be the notification that is put in the subject box 11 of Figure 5. The possible actions might then read: READ DESCRIPTION, VIEW LATER, VIEW ASAP, IGNORE, SEND SMS TO FRED. The UE presents the notification 'You Have New Content From Fred', in the stand look and feel on the display and overlays the various actions. Note that the positioning of the actions can be determined by the package sent from the notification or according to predetermined rules on the UE.

If the user selects VIEW LATER then the UE passes the action to the notification agent. The agent then triggers content movement to cache the content for later view. A new notification can then be generated 'The Content Will Be Ready For Viewing At 17:00. Actions None.'

In the above example, neither a specific content aware client nor any processing logic is required on the UE.

A further scenario relates to email received on an IPTV system. The notification agent 4 detects that a new email has been received. The agent generates notification to the IPTV UE 'You Have Mail'. Actions READ, REPLY, IGNORE. The UE presents its notification in a standard look and feel and overlays the various actions. The user selects READ in this example. The UE passes this action to the notification agent. The agent then retrieves the email body using an appropriate email protocol such as IMAP, POP3. A new notification is then generated containing the mail body and a new set of actions. The cycle then continues. In this example, again, no specific email processing (POP3, IMAP, SMTP, etc) client nor any processing logic is required on the UE.

A yet further scenario relates to IPTV SMS notifications. A similar data flow to the above scenario will occur but a READ action is triggered to an SMS server on SMPP from the notification proxy. Again, no SMPP clients nor any processing logic is required on the UE itself. All of the above scenarios, and many others, may be achieved on the same UE using a common look and feel, neither any notification, specific client nor processing logic is required on the UE.

Many variations are possible. Notification presentation can be adapted so that if, for example, a low-priority message is received, this is delivered after the end of a TV programme (eg football match) the user is watching. Or it might be displayed in a less conspicuous manner but overlaid on the match.

The present invention removes notification processing logic from the UE. This enables multiple notification sources can be supported via a common and cost efficient way. It also allows virtually unlimited extensions, including new notification sources to be added to the middle where (ie at the server or infrastructure level) with UE upgrades or modifications. This is very cost efficient and also enables 'pick and mix' converged services to be made available depending on operator requirements.

The UE is not require to have any arbitration between multiple notification clients and other applications. Also no GUI customisation is required for each client since the UE can use a common look and feel for all notifications.

Thus, core processing of notifications is moved from the UE and instead is done in the notification agent (and/or by external pluggable logic) rather than at the UE. The user simply needs to select a response.

## Claims

1. A notification system for providing notifications, over a network, to a user equipment (UE) (1) from a plurality of sources (3-10) using at least two different protocols, comprising a notification agent (4) arranged to receive notifications from said plurality of notification sources and which are intended for the user equipment, the notification agent including means for receiving the notifications using a plurality of native protocols according to the protocol of the individual sources and for converting the notification to a single protocol, and providing notifications to the UE using the single protocol and means for allowing replies from a UE to be transmitted, over the single protocol, to the notification agent and from there, if appropriate, to the original source using the native protocol of said original source, including notification processing logic for providing further information to the UE with each notification, beyond the basic notification data; including data representative of one or more actions a user might wish to select in response to the notification.

2. A notification system as claimed in Claim 1, wherein the information provided to the UE comprises one or more notification, action, metadata, function ({NAMF} data).

3. A notification system as claimed in Claim 1, wherein the data includes data representative of the positioning and/or display of the notification.

4. A notification system as claimed in Claim 1, wherein the data provided from the notification agent to the UE is in a format that is displayed using a common look and feel, regardless of the protocol and look and feel of the notification from the original agent.

5. A notification system as claimed in Claim 1, including pluggable logic elements (6).

6. A notification system as claimed in Claim 1, wherein notification presentation and/or timing is adapted according to conditions and/or status.

7. A notification system as claimed in Claim 1, wherein notification processing is done internally in the notification agent and/or by processing logic 'pluggable' into the notification agent.

8. A notification agent (4), comprising means for receiving notifications from a plurality of sources (5-11) using different native protocols, and for providing notification to a UE (6) using a single protocol, means for converting the native protocols to the single protocol and the notification agent including notification processing logic for providing further information to the UE with each notification, beyond the basic notification data, means for allowing replies from a UE to be transmitted, over the single protocol to the notification agent and from there, if appropriate, to the original source using the native protocol of said original source: including notification processing logic for providing further information to the UE with each notification, beyond the basic notification data; including data representative of one or more actions a user might wish to select in response to the notification.

9. A notification agent as claimed in Claim 8, wherein the notification agent provides {NAMF} data to the UE.

10. A method of transmitting notifications from a plurality of agents (5-10), having different native protocols, to user equipment (UE) (1) over a network, comprising providing a notification agent (4), including notification processing logic and adapted to receive notifications from the plurality of agents using their native protocol and to convert the native protocols to a single notification protocol and forward these notifications to the UE using a single protocol, and the notification agent including notification processing logic for providing further information to the UE with each notification, beyond the basic notification data and means to allow replies from a UE to be transmitted, over the single protocol to the notification agent and from there, if appropriate, to the original source using the native protocol of said original source; the method providing further information to the UE with each notification, beyond the basic notification data; including data representative of one or more actions a user might wish to select in response to the notification.

11. A method as claimed in Claim 10, wherein the further data comprises one or more of {NAMF} data.

12. A method as claimed in Claim 11, wherein the data provided from the notification agent to the UE is in a format that is displayed using a common look and feel, regardless of the protocol and look and feel of the notification from the original agent.

13. A method as claimed in Claim 10, wherein the notification is received by a UE and displayed to the user of the UE with a series of selectable action which the user can select and reply, using the single protocol, to the notification agent which communicates with the plurality of agents using their native protocol to obtain further data or provide responses as determined by the user selection.

## Patentansprüche

1. Benachrichtigungssystem zur Bereitstellung, über ein Netzwerk, von Benachrichtigungen von einer Vielzahl von Quellen (3-10), welche mindestens zwei unterschiedliche Protokolle verwenden, an ein Benutzerendgerät (UE) (1), umfassend einen Benachrichtigungsagenten (4), welcher für den Empfang von Benachrichtigungen, die für das Benutzerendgerät bestimmt sind, von der besagten Vielzahl von Benachrichtigungsquellen ausgelegt ist, wobei der Benachrichtigungsagent Mittel für den Empfang der Benachrichtigungen, welche eine Vielzahl von nativen Protokollen verwenden, gemäß dem Protokoll der einzelnen Quellen sowie für das Umwandeln der Benachrichtigung in ein einziges Protokoll und das Bereitstellen der Benachrichtigungen unter Verwendung des einzigen Protokolls an das UE sowie Mittel, die eine Übertragung von Antworten von einem UE, über das einzige Protokoll, an den Benachrichtigungsagenten und, gegebenenfalls, von diesem an die ursprüngliche Quelle unter Verwendung des nativen Protokolls der besagten ursprünglichen Quelle ermöglichen, umfasst, einschließlich einer Benachrichtigungsverarbeitungslogik zur Bereitstellung, neben den Basisdaten der Benachrichtigung, von weiteren Informationen mit jeder Benachrichtigung an das UE; einschließlich von Daten, welche für eine oder mehrere Aktionen, die ein Benutzer gegebenenfalls in Reaktion auf die Benachrichtigung auswählen möchte, repräsentativ sind.

2. Benachrichtigungssystem nach Anspruch 1, wobei die an das UE bereitgestellten Informationen eine oder mehrere Benachrichtigungs-, Aktions-, Metadaten-, Funktionsdaten ({NAMF}-Daten) umfassen.

3. Benachrichtigungssystem nach Anspruch 1, wobei die Daten solche Daten umfassen, die für die Positionierung und/oder die Anzeige der Benachrichtigung repräsentativ sind.

4. Benachrichtigungssystem nach Anspruch 1, wobei die von dem Benachrichtigungsagenten an das UE bereitgestellten Daten eine Form aufweisen, welche unter Verwendung eines gemeinsamen "Look and Feel" angezeigt wird, ungeachtet des Protokolls und des "Look and Feel" der Benachrichtigung von dem ursprünglichen Agenten.

5. Benachrichtigungssystem nach Anspruch 1, umfassend steckbare Logikelemente (6).

6. Benachrichtigungssystem nach Anspruch 1, wobei die Anzeige und/oder das Timing der Benachrichtigung gemäß den Bedingungen und/oder dem Status angepasst wird.

7. Benachrichtigungssystem nach Anspruch 1, wobei die Verarbeitung der Benachrichtigung intern im Benachrichtigungsagenten und/oder durch eine in den Benachrichtigungsagenten 'steckbare' Verarbeitungslogik erfolgt.

8. Benachrichtigungsagent (4), umfassend Mittel für den Empfang von Benachrichtigungen von einer Vielzahl von Quellen (5-11), welche unterschiedliche native Protokolle verwenden, und für die Bereitstellung von Benachrichtigungen an ein UE (6) unter Verwendung eines einzigen Protokolls, Mittel zum Umwandeln der nativen Protokolle in das einzige Protokoll, und wobei der Benachrichtigungsagent eine Benachrichtigungsverarbeitungslogik für die Bereitstellung, mit jeder Benachrichtigung, neben den Basisdaten der Benachrichtigung, von weiteren Informationen an das UE, Mittel, um die Übertragung von Antworten von einem UE über das einzige Protokoll an den Benachrichtigungsagenten und, gegebenenfalls, von diesem an die ursprüngliche Quelle unter Verwendung des nativen Protokolls der besagten ursprünglichen Quelle zu ermöglichen, umfasst; umfassend eine Benachrichtigungsverarbeitungslogik für die Bereitstellung, mit jeder Benachrichtigung, neben den Basisdaten der Benachrichtigung, von weiteren Informationen an das UE; umfassend Daten, welche für eine oder mehrere Aktionen, die ein Benutzer gegebenenfalls in Reaktion auf die Benachrichtigung auswählen möchte, repräsentativ sind.

9. Benachrichtigungsagent nach Anspruch 8, wobei der Benachrichtigungsagent {NAMF}-Daten an das UE bereitstellt.

10. Verfahren zur Übertragung von Benachrichtigungen, welche unterschiedliche native Protokolle aufweisen, von einer Vielzahl von Agenten (5-10) an ein Benutzerendgerät (UE) (1) über ein Netzwerk, einschließlich des Bereitstellens eines Benachrichtigungsagenten (4), umfassend eine Benachrichtigungsverarbeitungslogik, und ausgelegt für den Empfang von Benachrichtigungen von der Vielzahl von Agenten, welche deren nativen Protokolle verwenden, und für die Umwandlung der nativen Protokolle in ein einziges Benachrichtigungsprotokoll sowie für das Weiterleiten dieser Benachrichtigungen an das UE unter Verwendung eines einzigen Protokolls, und wobei der Benachrichtigungsagent eine Benachrichtigungsverarbeitungslogik für die Bereitstellung, mit jeder Benachrichtigung, neben den Basisdaten der Benachrichtigung, von weiteren Informationen an das UE sowie Mittel, die eine Übertragung von Antworten von einem UE, über das einzige Protokoll, an den Benachrichtigungsagenten und, gegebenenfalls, von diesem an die ursprüngliche Quelle unter Verwendung des nativen Protokolls der besagten ursprünglichen Quelle ermöglichen, umfasst; wobei das Verfahren mit jeder Benachrichtigung neben den Basisdaten der Benachrichtigung weitere Informationen an das UE bereitstellt; umfassend Daten, welche für eine oder mehrere Aktionen, die ein Benutzer gegebenenfalls in Reaktion auf die Benachrichtigung auswählen möchte, repräsentativ sind.

11. Verfahren nach Anspruch 10, wobei die weiteren Daten eine oder mehrere der {NAMF}-Daten umfassen.

12. Verfahren nach Anspruch 11, wobei die von dem Benachrichtigungsagenten an das UE bereitgestellten Daten eine Form aufweisen, welche unter Verwendung eines gemeinsamen "Look and Feel" angezeigt wird, ungeachtet des Protokolls und des "Look and Feel" der Benachrichtigung von dem ursprünglichen Agenten.

13. Verfahren nach Anspruch 10, wobei die Benachrichtigung an einem UE empfangen und dem Benutzer des UE mit einer Reihe von auswählbaren Aktionen, die der Benutzer auswählen und auf welche er unter Verwendung des einzigen Protokolls an den Benachrichtigungsagenten, welcher mit der Vielzahl von Agenten unter Verwendung deren nativen Protokolls kommuniziert, antworten kann, um weitere Daten zu erhalten oder Reaktionen gemäß der Benutzerauswahl bereitzustellen.

## Revendications

1. Système de notification pour fournir des notifications, sur un réseau, à un équipement d'utilisateur (UE) (1) à partir d'une pluralité de sources (3 à 10) en utilisant au moins deux protocoles différents, comprenant un agent de notification (4) conçu pour recevoir des notifications à partir de ladite pluralité de sources de notification et qui sont destinées à l'équipement d'utilisateur, l'agent de notification comprenant des moyens pour recevoir les notifications utilisant une pluralité de protocoles natifs conformément au protocole de chacune des sources et pour convertir la notification en un protocole unique, et pour fournir des notifications à l'UE en utilisant le protocole unique et des moyens pour permettre à des réponses provenant d'un UE d'être transmises, sur le protocole unique, vers l'agent de notification et à partir de là, si cela convient, vers la source d'origine en utilisant le protocole natif de ladite source d'origine, y compris une logique de traitement de notification pour fournir d'autres informations à l'UE avec chaque notification, à l'exception des données de notification de base ; y compris des données représentatives d'une ou de plusieurs actions qu'un utilisateur peut vouloir sélectionner en réponse à la notification.

2. Système de notification selon la revendication 1, dans lequel les informations fournies à l'UE comprennent une ou plusieurs notifications, actions, métadonnées, fonctions (données {NAMF}).

3. Système de notification selon la revendication 1, dans lequel les données comprennent des données représentatives du positionnement et/ou de l'affichage de la notification.

4. Système de notification selon la revendication 1, dans lequel les données fournies à partir de l'agent de notification à l'UE sont dans un format qui est affiché en utilisant un aspect et une convivialité communs, quels que soient le protocole et l'aspect et la convivialité de la notification de l'agent d'origine.

5. Système de notification selon la revendication 1, comprenant des éléments logiques raccordables (6).

6. Système de notification selon la revendication 1, dans lequel une présentation et/ou un instant de notification est adapté conformément à des conditions et/ou à des états.

7. Système de notification selon la revendication 1, dans lequel un traitement de notification est effectué de manière interne dans l'agent de notification et/ou en traitant une logique « raccordable » dans l'agent de notification.

8. Agent de notification (4), comprenant des moyens pour recevoir des notifications à partir d'une pluralité de sources (5 à 11) en utilisant différents protocoles natifs, et pour fournir une notification à un UE (6) en utilisant un protocole unique, des moyens pour convertir les protocoles natifs en protocole unique et l'agent de notification comprenant une logique de traitement de notification pour fournir d'autres informations à l'UE avec chaque notification, à l'exception des données de notification de base, des moyens pour permettre à des réponses provenant d'un UE d'être transmises, sur le protocole unique vers l'agent de notification et à partir de là, si cela convient, vers la source d'origine en utilisant le protocole natif de ladite source d'origine : y compris une logique de traitement de notification pour fournir d'autres informations à l'UE avec chaque notification, à l'exception des données de notification de base ; y compris des données représentatives d'une ou de plusieurs actions qu'un utilisateur peut vouloir sélectionner en réponse à la notification.

9. Agent de notification selon la revendication 8, l'agent de notification fournissant des données {NAMF} à l'UE.

10. Procédé de transmission de notifications à partir d'une pluralité d'agents (5 à 10), ayant différents protocoles natifs, à un équipement d'utilisateur (UE) (1) sur un réseau, comprenant la fourniture d'un agent de notification (4), y compris une logique de traitement de notification et adapté pour recevoir des notifications à partir de la pluralité d'agents en utilisant leur protocole natif et pour convertir les protocoles natifs en un protocole de notification unique et pour transférer ces notifications à l'UE en utilisant un protocole unique, et l'agent de notification comprenant une logique de traitement de notification pour fournir d'autres informations à l'UE avec chaque notification, à l'exception des données de notification de base et des moyens pour permettre à des réponses provenant d'un UE d'être transmises, sur le protocole unique vers l'agent de notification et à partir de là, si cela convient, vers la source d'origine en utilisant le protocole natif de ladite source d'origine ; le procédé fournissant d'autres informations à l'UE avec chaque notification, à l'exception des données de notification de base ; y compris des données représentatives d'une ou de plusieurs actions qu'un utilisateur peut vouloir sélectionner en réponse à la notification.

11. Procédé selon la revendication 10, dans lequel les autres données comprennent une ou plusieurs données {NAMF}.

12. Procédé selon la revendication 11, dans lequel les données fournies à partir de l'agent de notification à l'UE sont dans un format qui est affiché en utilisant un aspect et une convivialité communs, quels que soient le protocole et l'aspect et la convivialité de la notification de l'agent d'origine.

13. Procédé selon la revendication 10, dans lequel la notification est reçue par un UE et affichée pour l'utilisateur de l'UE avec une série d'actions sélectionnables que l'utilisateur peut sélectionner et une réponse, en utilisant le protocole unique, à l'agent de notification qui communique avec la pluralité d'agents en utilisant leur protocole natif pour obtenir d'autres données ou pour fournir des réponses comme cela est déterminé par la sélection de l'utilisateur.
